**Europäisches Patentamt**

**European Patent Office**

**Office européen des brevets**

(19)

(11) Veröffentlichungsnummer: **0 058 179**
**B1**

(12) # EUROPÄISCHE PATENTSCHRIFT

(45) Veröffentlichungstag der Patentschrift:
**11.09.85**

(51) Int. Cl.⁴: **E 02 B 15/04**

(21) Anmeldenummer: **81902304.5**

(22) Anmeldetag: **24.07.81**

(86) Internationale Anmeldenummer:
**PCT/EP 81/00104**

(87) Internationale Veröffentlichungsnummer:
**WO 82/00671 (04.03.82 Gazette 82/7)**

(54) **VORRICHTUNG ZUM ABSCHÖPFEN VON AUF WASSER SCHWIMMENDEN STOFFEN.**

(30) Priorität: **21.08.80 DE 3031479**

(43) Veröffentlichungstag der Anmeldung:
**25.08.82 Patentblatt 82/34**

(45) Bekanntmachung des Hinweises auf die Patenterteilung:
**11.09.85 Patentblatt 85/37**

(84) Benannte Vertragsstaaten:
**DE FR GB NL SE**

(56) Entgegenhaltungen:
**DE - A - 2 819 281**
**FR - A - 2 157 239**
**GB - A - 1 530 342**
**US - A - 3 630 376**
**US - A - 3 865 730**
**US - A - 4 033 876**
**US - A - 4 182 679**

(73) Patentinhaber: **Sobinger, Dietrich, Holunderweg 84 a,
D-4300 Essen 1 (DE)**

(72) Erfinder: **Sobinger, Dietrich, Holunderweg 84 a,
D-4300 Essen 1 (DE)**

(74) Vertreter: **Patentanwälte Dr. Solf & Zapf,
Schlossbleiche 20 Postfach 13 01 13,
D-5600 Wuppertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf eine Vorrichtung zum Abschöpfen von auf Wasser schwimmenden Stoffen, insbesondere Öl, mit einer gegen die Wasseroberfläche geneigten Auflauffläche, deren vorderes Ende unterhalb und deren hinteres Ende oberhalb der Wasseroberfläche liegt und mit mindestens einer Auffangöffnung in der Auflauffläche oberhalb der Wasseroberfläche, die mit einem Auffangraum verbunden ist.

Eine derartige Vorrichtung ist bereits aus der DE-OS 2 819 281 bekannt. Bei dieser bekannten Abschöpfvorrichtung liegt die Auflauframpe in einem Rampentunnel, so daß diese als Schiff ausgebildete bekannte Vorrichtung zum Einsatz bei Wellengang wenig geeignet ist, weil sich die Wellen an der Tunneldecke brechen würden, was zu einer Verwirbelung auf der Rampe führen würde, so daß keine Abschöpfung möglich wäre. Weiterhin kann hierbei innerhalb des Tunnels ein Wellenstau entstehen und somit ein Rückstaueffekt, der ein Abschöpfen vollständig verhindern würde. Weiterhin ist hierbei nachteilig, daß die Rampe oberhalb des Bodens beginnt, so daß sich eine senkrechte, den einlaufenden Wellen zugekehrte Heckwand ergibt. Diese senkrechte Heckwand erzeugt aber eine hohe Stauwelle vor der Rampe, die ein Auflaufen eines eventuell vorhandenen Ölfilms verhindert; ein Effekt, der insbesondere bei ruhigen Gewässern von Bedeutung ist. Aufgrund der vorstehenden konstruktiven Gegebenheiten ist diese bekannte Vorrichtung bei Wellengang und bei relativ ruhigen Gewässern nicht funktionstauglich.

Aus der FR-A-2 157 239 ist eine Abschöpfvorrichtung bekannt, die eine Auflaufschräge besitzt, die als schwenkbar gelagerter Arm ausgebildet ist, der mit seinem vorderen Ende unterhalb der Wasserlinie liegt. Die Auflauffläche endet hierbei innerhalb eines bassinartigen Wasserraums im Schiff, so daß der Auflaufschräge das Schiffsheck vorgelagert ist, was aber wiederum eine unerwünschte Stauwelle erzeugt. Diese wird noch durch die am Heck des Schiffes befindlichen Schiffsschrauben verstärkt, so daß auch bei dieser Vorrichtung bei ruhigem Gewässer keine wirksame Abschöpfung möglich ist. Die Auflaufschräge ist bei dieser bekannten Vorrichtung nach oben offen ausgeführt, um ihre Verstellbarkeit mittels Kettenzüge zu erreichen. Durch diese Verstellbarkeit über die nicht starren Kettenzüge ist die Auflaufschräge selbst ebenfalls nicht starr, sondern verändert sich bei Wellengang, so daß eine sichere Abschöpfung bei Wellengang nicht gegeben ist. Darüber hinaus stellt der Innenraum des Schiffes einen Stauraum dar, der zu einem Rückstau vor der Auflaufschräge führt, wobei an der Rückwand des Innenraums Wellen zurückgeworfen werden und die rücklaufenden Wellen ein Auflaufen auf die Auflaufschräge erschweren bzw. verhindern.

Der vorliegenden Erfindung liegt nun die Aufgabe zugrunde, ausgehend von einer Vorrichtung der eingangs beschriebenen Art, diese derart zu verbessern, daß eine sichere Abschöpfung der auf dem Wasser schwimmenden Stoffe sowohl bei ruhigem Gewässer als auch bei Wellengang bzw. starker Wasserströmung bei hohen Abschöpfleistungen erzielt wird, und zwar auf der Basis einer einfachen und funktionsgerechten Konstruktion.

Erfindungsgemäß wird diese Aufgabe dadurch gelöst, daß die Auflauffläche einen Teil der Oberfläche eines Schwimmkörpers bildet und sich unmittelbar von dem Boden des Schwimmkörpers schräg nach oben erstreckt und daß der entlang der Auflauffläche gemessene Abstand zwischen Wasseroberfläche und Auffangöffnung und/oder der Neigungswinkel der Auflauffläche gegenüber der Horizontalen in Abhängigkeit von der Auflaufgeschwindigkeit des Wassers und/oder der Höhe des Wellengangs veränderbar sind. Aufgrund dieser konstruktiven Ausführungsform gemäß der Erfindung wird verhindert, daß sich unmittelbar vor der Schrägfläche eine Stauwelle aufbauen kann. Dies ist aber Bedingung dafür, daß unter allen Bedingungen ein sicheres Abschöpfen überhaupt möglich ist.

Aus der GB-PS 947 026 ist eine Vorrichtung zum Abschöpfen bekannt, bei der eine Schrägfläche vorhanden ist, die vollständig unterhalb der Wasseroberfläche liegt, um eine Art Abschöpffläche zu bilden. Die Schrägfläche in Verbindung mit der endseitigen Platte hat die Funktion, einen Bug zu bilden, wodurch lediglich der Strömungswiderstand des gesamten Schwimmkörpers verringert werden soll, und zwar im Gegensatz zu Bugformen, bei denen eine senkrechte Bugplatte vorhanden ist. Diese bekannte Schrägfläche besitzt jedoch nicht die erfindungsgemäße Wirkung, daß sich die Strömungsenergie auf der Schrägfläche selbst aufbraucht. Vielmehr wird durch die vollständig unter der Wasserlinie liegende Schrägfläche gerade nicht die Strömungsenergie des Wassers abgebaut, so daß eine Abbremsung der Wasserbewegung nicht erfolgt. Bei der aus der GB-PS 947 026 bekannten Vorrichtung ist lediglich ein Staugrad vorhanden, gegen den das Wasser mit den Schmutzpartikeln bzw. dem Öl anströmt, dort aufgestaut wird und dann überläuft. Es liegt somit ein vollständig anderes Abschöpfprinzip als das erfindungsgemäße vor. Denn gemäß der Erfindung soll jegliches Aufstauen gerade vermieden werden, weil hierdurch Verwirbelungen entstehen, die gerade ein Abschöpfen des Öls verhindern würden. Auch ist das aus der GB-PS 947 026 bekannte Prinzip für Wellengang nicht geeignet, da der Staugrad von Wellen beliebig überspült würde. Gerade aber bei Wellengang weist die erfindungsgemäße Vorrichtung außerordentlich gute Eigenschaften auf, weil auf der oberhalb des Wasserspiegels sich befindenden Schrägfläche die Wellen brechen und auflaufen und das auf der Oberfläche mitgenommene Öl am Ende der Schrägfläche aufgefangen und gesammelt wird.

Die Erfindung beruht somit auf der Erkenntnis, daß beim Auflaufen die auf der Oberfläche befindlichen, abzuschöpfenden Stoffe sich nicht mit dem auflaufenden Wasser vermischen und mit nur einer begrenzten Wassermenge auf die Fläche aufgeschwemmt werden. Es erfolgt somit beim Auffangen bereits eine erste Trennung und Reduzierung der Wassermenge in bezug auf die aufzunehmenden Stoffe, da nur die obersten Wasserschichten zusammen mit den auf der Oberfläche schwimmenden Stoffen aufgefangen werden. Die Erfindung beruht auf der weiteren Erkenntnis, daß es erforderlich ist, die sich ausbildende Stauwelle weit vor die Auflauffläche vorzuverlagern und weitgehendst zu reduzieren, so daß die abzuschöpfenden Stoffe die Welle ungehindert überwinden können. Weiterhin bringt die Erfindung den Vorteil mit sich, daß durch die unterhalb der Wasseroberfläche beginnende Auflaufschräge auch Stoffe mit erfaßt werden, die sich unterhalb der Wasseroberfläche befinden. Insbesondere auch bei Wellengang ist die vorliegende Erfindung von Vorteil, weil durch das Auflaufen eine fortlaufende Schwächung der Wellenenergie entsprechend der Steigung erreicht wird. Dabei gibt die Erfindung die vorteilhafte Möglichkeit, durch Veränderung des Auflaufweges und/oder des Auflaufwinkels die optimale Abschöpfung in Abhängigkeit von der jeweiligen Auflaufgeschwindigkeit und/oder der Höhe der Wellen zu erreichen. Insbesondere kann bei starker Strömung und hohen Wellen ein gestaffeltes bzw. stufenförmiges Auffangen der auf der Auflaufschräge angeschwemmten Stoffe erfolgen.

Eine besonders einfache Ausgestaltung der erfindungsgemäßen Vorrichtung besteht darin, die sich insbesondere für die Anwendung auf Binnengewässer mit relativ geringem Wellengang eignet, daß die Auffangöffnung sich über die gesamte Breite der Auflauffläche erstreckt.

Bei stärkeren Strömungsgeschwindigkeiten und höherem Wellengang ist es insbesondere vorteilhaft, wenn auf der Auflauffläche mehrere schlitzförmige Auffangöffnungen im Abstand nebeneinander und übereinander angeordnet sind. Hierbei kann die Anordnung derart sein, daß die jeweils oberen Auffangöffnungen oberhalb der Zwischenräume zwischen den unteren Auffangöffnungen angeordnet sind. Durch diese erfindungsgemäße Anordnung und Ausführung der Auffangöffnungen wird eine vollständige Abschöpfung der gesamten angeschwemmten Stoffe erreicht und ein Rückstau durch evtl. zurückfließende Anteile verhindert.

Indem in weiterer Ausgestaltung der Erfindung als vorderste Auffangöffnung eine sich über die gesamte Breite der Auflauffläche erstreckende schlitzförmige Auffangöffnung ausgebildet ist, an der sich dann die vorstehend beschriebene Anordnung der einzelnen Auffangöffnungen anschließen, wird eine Vorrichtung geschaffen, die sowohl bei ruhigem als auch bei bewegtem Wasser optimal eingesetzt werden kann.

Weitere vorteilhafte Ausführungen der Auffangöffnungen sind in den Unteransprüchen 6 bis 9 beschrieben.

Weiterhin kann es von Vorteil sein, wenn der Schwimmkörper einen flutbaren Doppelboden und/oder flutbare Wallgänge besitzt. Durch das Fluten des Doppelbodens und der Wallgänge kann jeweils die Wasserlinie des Schwimmkörpers bei einem vorgegebenen Tiefgang verändert werden. Dabei wird durch das Fluten des Doppelbodens und der Wallgänge der Schwimmkörper abgesenkt und durch ein Lenzen derselben kann der Tiefgang verringert werden. Der Tiefgang hängt dabei von dem gewünschten Abstand der ersten Überlaufkante der Aufnahmeöffnungen von der Wasseroberfläche ab und dieser wird wiederum in Abhängigkeit vom Wellengang, der Strömungsgeschwindigkeit und dem angestrebten Ölstand des abgesetzten Öles im Auffangbehälter gewählt. Beispielsweise bei einer Strömungsgeschwindigkeit von 1 m/Sek. wird der Tiefgang derart eingestellt, daß eine Höhenüberwindung von ca. 70 mm zum Erreichen der ersten Überlaufkante der Auffangöffnungen erforderlich ist.

Mittels der flut- und lenzbaren Wallgänge und des Doppelbodens ist es ebenso möglich, den Tiefgang in Abhängigkeit von der Aufnahmemenge des Öl-Wassergemischs im Auffangbehälter konstant zu halten, so daß der Doppelboden und die Wallgänge in gleicher Weise entleert bzw. gelenzt werden, wie sich der Auffangbehälter füllt, d. h. die gelenzte Wassermenge entspricht gewichtsmäßig der Aufnahmemenge des Auffangbehälters. Mit diesem ist es ebenfalls möglich, durch unterschiedliche Befüllung der sich gegenüberliegenden Tanks eine Veränderung des Auflaufwinkels zu erzeugen.

Weitere vorteilhafte Ausführungsformen der Erfindung sind in den Unteransprüchen 11 und 12 enthalten.

Anhand der in den Zeichnungen dargestellten Ausführungsbeispiele wird die Erfindung näher erläutert. Es zeigt

Fig. 1 eine Seitenansicht im Schnitt einer erfindungsgemäßen Vorrichtung,

Fig. 2 eine Aufsicht auf eine erfindungsgemäße Vorrichtung gemäß Fig. 1 mit alternativ ausgestalteter Auflauffläche,

Fig. 3 eine Seitenansicht im Schnitt einer weiteren Ausführungsform einer erfindungsgemäßen Vorrichtung,

Fig. 4 eine Aufsicht auf die Vorrichtung gemäß Fig. 3,

Fig. 5 eine Aufsicht auf mehrere miteinander gelenkig verbundene Vorrichtungen gemäß Fig. 3.

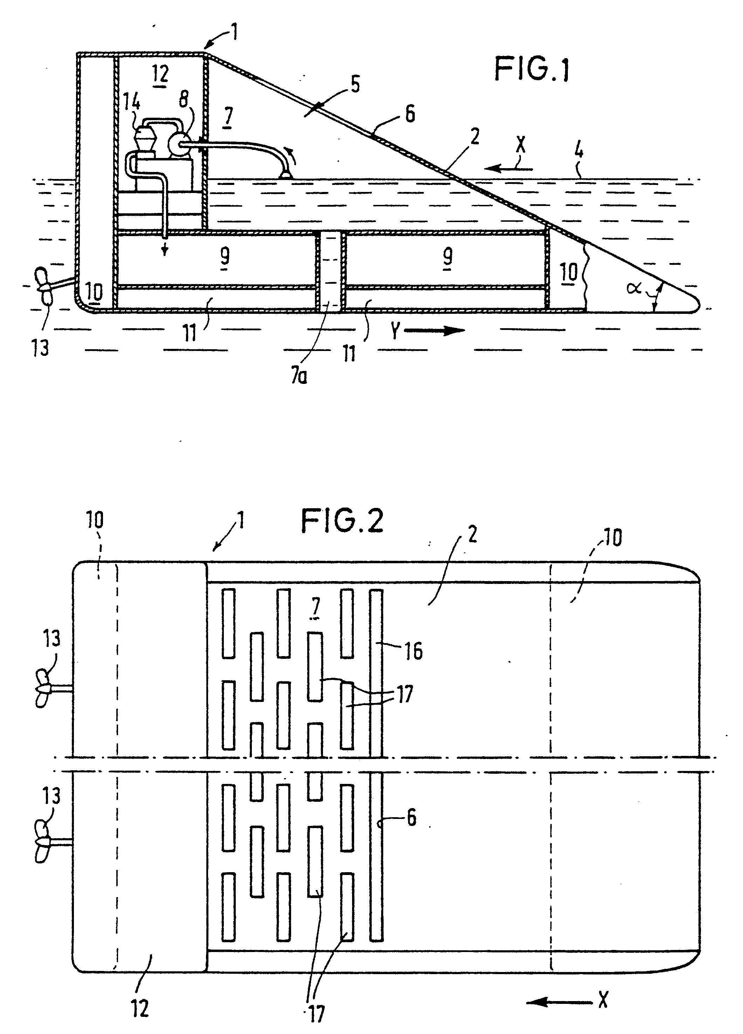

Wie sich aus Fig. 1 ergibt, besteht eine erfindungsgemäße Vorrichtung aus einem Schwimmkörper 1, der eine Auflaufschräge bzw. -fläche 2 besitzt, die einen Neigungswinkel $\alpha$ mit der Unterkante bzw. dem Boden 3 des Schwimmkörpers einschließt. Das heißt, daß die Auflauffläche 2 sich bis zur Schwimmkörperunterkante erstreckt, so daß sich im Betrieb des Schwimmkörpers die Auflauffläche 2 mit ihrem vorderen Abschnitt stets unterhalb einer Wasseroberfläche 4 befindet, wodurch eine Stauwelle möglichst weit der Auflauffläche 2 vorgelagert wird. Die Strömungsrichtung des auflaufenden Wassers ist durch den Pfeil X angegeben. Das Auflaufen des Wassers auf die Auflauffläche 2 kann einerseits durch die Bewegung des Schwimmkörpers 2 in Richtung des Pfeils Y erreicht werden oder aber, indem der Schwimmkörper 1 stillsteht und das Auflaufen des Wassers alleine durch eine entsprechende Strömung des Wassers in Pfeilrichtung X erreicht wird. Das Auflaufen des Wassers kann auch durch beide Effekte gleichzeitig bewirkt werden. In der Auflauffläche 2 ist eine Auffangöffnung 5 ausgebildet. Im dargestellten Beispiel handelt es sich um eine Auffangöffnung 5, die sich zweckmäßiger Weise über die gesamte Breite der Auflauffläche 2 erstreckt, wobei die Auflauffläche 2 praktisch an der Vorderkante, der Überlaufkante 6 endet. Die Auffangöffnung 5 ist im dargestellten Beispiel unmittelbar mit dem Innenraum eines Auffangbehälters 7 verbunden. Befindet sich nun auf der Wasseroberfläche 4 eine Schicht aus abzuschöpfenden Stoffen, insbesondere eine Ölschicht, so wird im Behälter 7 das über die Überlaufkante 6 laufende Öl-Wassergemisch gesammelt. Weiterhin weist die erfindungsgemäße Vorrichtung ein Pumpenaggregat 8 auf, das zum Absaugen des sich im Behälterinnenraum auf dem Wasser abgesetzten Öls bzw. Stoffes dient. Der Behälterinnenraum ist unmittelbar über eine Öffnung 7a mit dem Außenwasser verbunden, wodurch eine automatische Wasserstandsanpassung auf den mittleren Wasserstand zwischen Wellenberg und Wellental im Innenraum erfolgt. Dabei wird das über die Pumpe 8 abgesaugte Öl in einen bzw. mehrere Lagertanks 9 gepumpt. Es liegt jedoch ebenfalls im Rahmen der Erfindung, wenn die erfindungsgemäße Vorrichtung derartige Lagertanks selbst nicht aufweist, sondern derartige Lagertanks beispielsweise in einem den Schwimmkörper 1 schiebenden Schlepper oder aber bei einer stationär angeordneten erfindungsgemäßen Vorrichtung außerhalb des Schwimmkörpers angeordnet sind. Dabei kann dann eine Verbindung zwischen dem Pumpenaggregat 8 und den Lagertanks mittels einer flexiblen Schlauchleitung erfolgen.

Weiterhin besitzt die erfindungsgemäße Vorrichtung flutbare bzw. lenzbare Wallgänge 10 und einen ebenfalls flutbaren bzw. lenzbaren Doppelboden 11. Mittels des Doppelbodens 11 und der Wallgänge 10 kann der Tiefgang oder die Neigung des Schwimmkörpers 1 jeweils eingestellt werden.

Das Pumpenaggregat 8 ist in einem Maschinenraum 12 angeordnet. In diesem Maschinenraum kann zusätzlich eine nicht dargestellte Antriebseinheit für den erfindungsgemäßen Schwimmkörper vorgesehen sein zum Antreiben einer oder mehrerer Schiffsschrauben 13. Im Rahmen der Erfindung liegt es jedoch ebenfalls, wenn der Schwimmkörper 1 nicht unmittelbar selbst angetrieben ist. Dem Pumpenaggregat 8 ist zweckmäßigerweise eine Zentrifuge 14 nachgeordnet und/oder ein Adsorptions-Koaleszenz-Filter, um eine vollständige Trennung des abgesaugten Öls von einem bestimmten Wasserrestgehalt zu erreichen.

In Fig. 2 ist eine alternative Ausführungsform eines erfindungsgemäßen Schwimmkörpers dargestellt, wobei jedoch gleiche Teile wie in Fig. 1 mit denselben Bezugsziffern versehen sind. Hierbei ist die Auflauffläche 2 mit einer Vielzahl von Auffangöffnungen 16, 17 versehen. Dabei ist die vorderste Auffangöffnung 16 als Schlitz ausgebildet, der sich über die gesamte Breite der Auflauffläche 2 erstreckt. In Auflaufrichtung hinter dieser Auffangöffnung 16 befindet sich eine Mehrzahl von nebeneinander und übereinander angeordneten schlitzförmigen Auffangöffnungen 17. Dabei sind diese Auffangöffnungen 17 derart nebeneinander und übereinander angeordnet, daß die jeweils oberen Auffangöffnungen über den Zwischenräumen zwischen den unteren Auffangöffnungen angeordnet sind. Anstelle der Kombination eines durchgehenden vorderen Schlitzes mit dahinter angeordneten, versetzten Auffangöffnungen 17 können auch ausschließlich derartige Auffangöffnungen 17 über die gesamte Auflauffläche 2 verteilt sein, wobei ein Vorderbereich der Auflauffläche stets öffnungsfrei ist. Die einzelnen Öffnungen 5, 16 oder 17 können in ihrer Größe verstellbar ausgebildet sein.

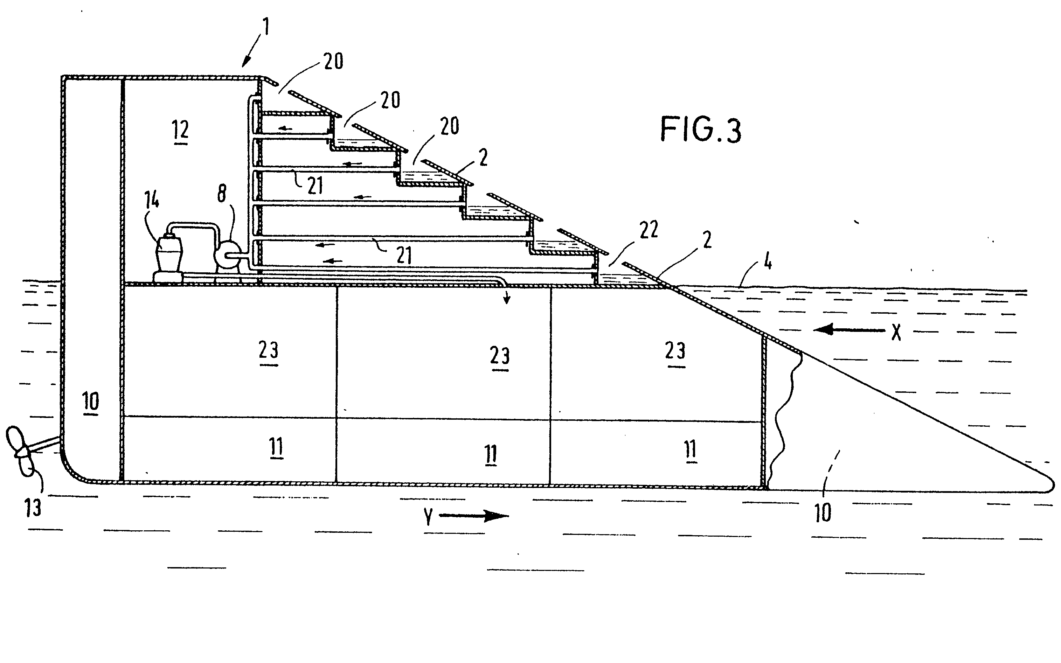

In Fig. 3 ist eine weitere Ausgestaltung einer erfindungsgemäßen Vorrichtung gezeigt, wobei wiederum gleiche Teile wie in Fig. 1 mit denselben Bezugsziffern versehen sind.

Hierbei sind in der Auflauffläche 2 Auffangtaschen 20 ausgebildet, in denen das mit dem Wasser aufgeschwemmte Öl bzw. die mit dem Wasser aufgeschwemmten Stoffe abgeschöpft werden. Die Auffangtaschen 20 sind mittels Absaugrohren 21 mit dem Pumpenaggregat 8 verbunden. Demnach ist hier kein zentraler Auffangbehälter vorhanden, vielmehr eine Vielzahl von Sammelbehältern, die durch die Auffangtaschen 20 gebildet werden. Jede Auffangtasche 20 besitzt wiederum Auffangöffnungen 22, die entsprechend den Auffangöffnungen 16, 17 in Fig. 2 ausgebildet sein können. Die Auffangtaschen 20 sind im dargestellten Beispiel treppenartig übereinander und/oder versetzt zueinander in der Auflauffläche 2 angeordnet. Die Auffangtaschen 20 und/oder die Absaugrohre 21 können mittels einer Heizanlage beheizbar sein. Die Heizanlage ist dann an einem Dampfkessel mit einem Abfallölbrenner angeschlossen, was im einzelnen nicht gezeigt ist. Über die Absaugrohre wird das Stoff-Wassergemisch in Tanks 23 gepumpt, wo der Absetzprozeß abläuft. Diese Tanks 23 können mit dem Außenwasser über eine Öffnung unmittelbar auch absperrbar verbunden sein.

In den dargestellten Beispielen ist eine konstante Steigung der Auflauffläche 2 dargestellt.

Es liegt jedoch im Rahmen der Erfindung, die Steigung nicht konstant, sondern sich über die Auflauffläche verändernd auszubilden. So kann beispielsweise zunächst im Anfangsbereich eine stärkere Steigung sein, dann eine verringerte kontinuierliche Steigung, die dann am Ende der Auflauffläche wiederum in eine stärkere Steigung übergeht. Es ist ebenfalls möglich, am Anfang der Auflauffläche zunächst eine geringere Steigung als im Mittelbereich vorzusehen, um dann im Endbereich wiederum eine gegenüber dem Mittelbereich verstärkte Steigung zu wählen. Dabei sind Steigungen im Bereich von 1 : 10 bis 1 : 4 zweckmäßig.

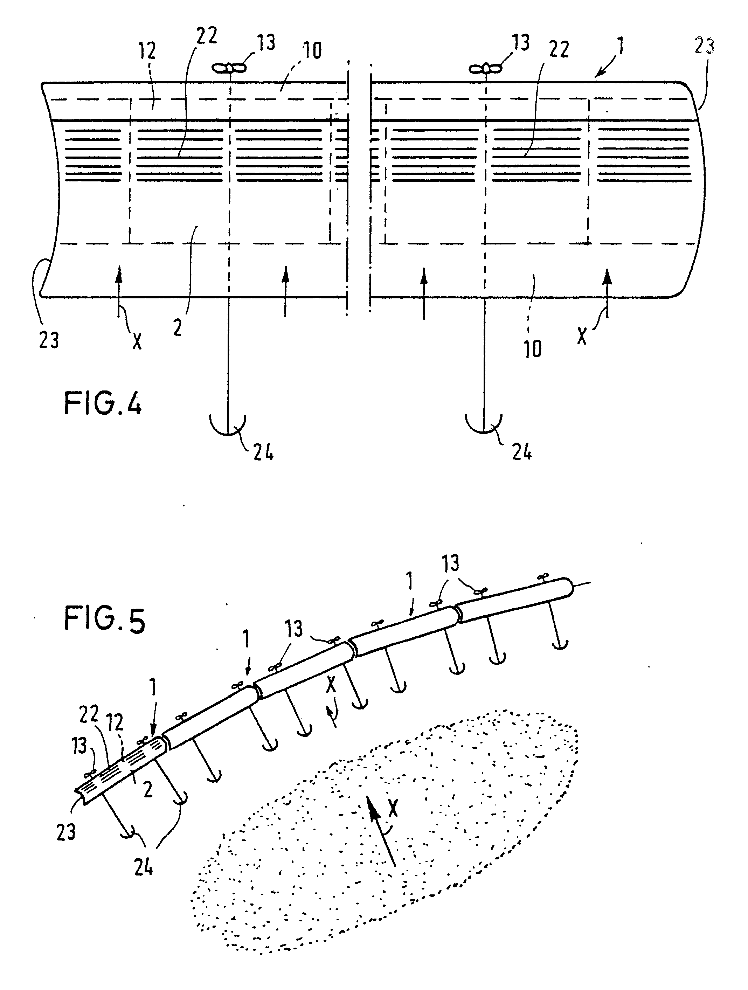

Wie sich insbesondere aus Fig. 4 ergibt, wobei gleiche Teile wie in Fig. 1 bis 3 mit denselben Bezugsziffern versehen sind, ist der Schwimmkörper 1 als langgestreckter Körper ausgebildet, wobei eine Breitseite von der Auflauffläche 2 gebildet wird und auf seiner anderen Breitseite der Maschinenraum 12 ausgebildet ist. Die Wallgänge 10 sind zumindest beidseitig über die Längsseite des Schwimmkörpers 1 angeordnet. Die Körperenden sind im dargestellten Beispiel als korrespondierende kugelgelenkartige bzw. gelenkpfannenartige Kuppelenden 23 ausgebildet, um eine Mehrzahl erfindungsgemäßer Schwimmkörper 1 zu einer Ölsperre verbinden zu können, wie dies in Fig. 5 dargestellt ist. Wie bereits ausgeführt, ist der Schwimmkörper 1 zur Verbesserung seiner Manövrierfähigkeit mit Antriebsschrauben 13 ausgerüstet und weist außerdem Anker 24 auf, und zwar auf der den Antriebsschrauben gegenüberliegenden Breitseite. Diese Ausführungsform der Erfindung ermöglicht es, eine Mehrzahl erfindungsgemäßer Schwimmkörper untereinander bzw. in Reihe zu einer praktisch unbegrenzt langen Ölsperre aneinander zu koppeln, nämlich in Abhängigkeit von der jeweiligen Größe des abzuschöpfenden Ölteppichs.

Durch die vorliegende Erfindung wird eine konstruktiv einfache Bauweise verwirklicht, in der keinerlei Aggregate enthalten sind, die verschleißanfällig sind. Somit ist die erfindungsgemäße Vorrichtung insbesondere für den Einsatz auf See geeignet. Darüber hinaus läßt sich die erfindungsgemäße Vorrichtung besonders wirtschaftlich einsetzen. So können verschiedene erfindungsgemäße Vorrichtungen an besonders gefährdeten Küstenstreifen vor Anker liegen und im Katastrophenfall mittels Schlepper an den jeweiligen Unglücksort gebracht werden. Aufgrund der langgestreckten Ausführungsform des erfindungsgemäßen Schwimmkörpers kann beispielsweise eine Länge bis zu 100 m verwirklicht werden, so daß es möglich ist, schon mit wenigen Vorrichtungen jede Öltankerhavarie bzw. jedes havarierte Bohrloch sicher abzusperren. Die erfindungsgemäße Vorrichtung ist einfach zu bedienen und braucht bei ihrem Einsatz praktisch zur Bedienung keine besonders ausgebildeten Kräfte. Weiterhin ist es auch nicht erforderlich, sie dauernd im Einsatz zu besetzen. Die Ladekapazität der erfindungsgemäßen Vorrichtung kann derart ausgelegt werden, daß der Wert des abgeschöpften Öls unter Berücksichtigung der heutigen Ölpreise zumindest die Einsatzkosten während eines Ölunfalls ausmacht und durch diesen Betrag finanziert werden kann. Dies gilt auch für größere Ölkatastrophen, wenn auch dabei die Ladetanks zwischendurch geleichtert werden müssen. Die erfindungsgemäße Vorrichtung läßt sich sowohl auf See als auch in Binnengewässern und in Flüssen einsetzen.

**Patentansprüche**

1. Vorrichtung zum Abschöpfen von auf Wasser schwimmenden Stoffen, insbesondere Öl, mit einer gegen die Wasseroberfläche geneigten Auflauffläche (2), deren vorderes Ende unterhalb und deren hinteres Ende oberhalb der Wasseroberfläche liegt, und mit mindestens einer Auffangöffnung (5, 16, 17, 22) in der Auflauffläche oberhalb der Wasseroberfläche, die mit einem Auffangraum (7) verbunden ist, dadurch gekennzeichnet, daß die Auflauffläche (2) einen Teil der Oberfläche eines Schwimmkörpers (1) bildet und sich unmittelbar von dem Boden (3) des Schwimmkörpers (1) schräg nach oben erstreckt, und daß der entlang der Auflauffläche (2) gemessene Abstand zwischen Wasseroberfläche (4) und Auffangöffnung (5, 16, 17, 22) und/oder der Neigungswinkel ($\alpha$) der Auflauffläche (2) gegenüber der Horizontalen in Abhängigkeit von der Auflaufgeschwindigkeit des Wassers und/oder der Höhe des Wellengangs veränderbar sind.

2. Vorrichtung nach Anspruch 1, dadurch gekennzeichnet, daß die Auffangöffnung (5) sich über die gesamte Breite der Auflauffläche (2) an deren Ende erstreckt.

3. Vorrichtung nach Anspruch 1 oder 2, dadurch gekennzeichnet, daß mehrere schlitzförmige Auffangöffnungen (17) im Abstand nebeneinander und übereinander in der Auflauffläche (2) angeordnet sind.

4. Vorrichtung nach Anspruch 3, dadurch gekennzeichnet, daß die Auffangöffnungen (17) derart übereinander versetzt angeordnet sind, daß die jeweils oberen Auffangöffnungen oberhalb der Zwischenräume zwischen den unteren Auffangöffnungen angeordnet sind.

5. Vorrichtung nach Anspruch 3 oder 4, dadurch gekennzeichnet, daß als vorderste Auffangöffnung eine sich über die gesamte Breite der Auflauffläche (2) erstreckende schlitzförmige Auffangöffnung (16) ausgebildet ist.

6. Vorrichtung nach einem oder mehreren der Ansprüche 2 bis 5, dadurch gekennzeichnet, daß die Auffangöffnungen (5, 16, 17, 22) in ihrer Öffnungsgröße verstellbar ausgebildet sind.

7. Vorrichtung nach Anspruch 3 oder 4, dadurch gekennzeichnet, daß in der Auflauffläche (2) Auffangöffnungen (22) angeordnet sind, die jeweils mit Auffangtaschen (20) verbunden sind, die über Absaugrohre (21) und eine Pumpe (8) mit dem Aufnahmetank (23) für den abgeschöpften Stoff verbunden sind.

8. Vorrichtung nach einem oder mehreren der Ansprüche 1 bis 7, dadurch gekennzeichnet, daß der Auffangbehälter (7) oder die Aufnahmetanks (23) durch eine Öffnung (7a) mit dem Außenwasser verbunden sind.

9. Vorrichtung nach einem oder mehreren der Ansprüche 1 bis 9, dadurch gekennzeichnet, daß der Schwimmkörper (1) in seiner Eintauchtiefe und seinem -winkel veränderbar ist.

10. Vorrichtung nach Anspruch 9, dadurch gekennzeichnet, daß der Schwimmkörper (1) einen flutbaren Doppelboden (11) und/oder flutbare Wallgänge (10) aufweist.

11. Vorrichtung nach einem oder mehreren der Ansprüche 1 bis 10, dadurch gekennzeichnet, daß der Neigungswinkel ($\alpha$) der Auflauffläche (2) konstant ist.

12. Vorrichtung nach einem oder mehreren der Ansprüche 1 bis 11, dadurch gekennzeichnet, daß die Auflauffläche (2) Bereiche unterschiedlicher Steigung aufweist.

13. Vorrichtung nach einem oder mehreren der Ansprüche 1 bis 12, dadurch gekennzeichnet, daß der Schwimmkörper (1) als langgestreckter Körper mit an seiner einen Breitseite ausgebildeter Auflauffläche (2) und mit an seiner anderen Breitseite ausgebildeten Maschinenraum (12) ausgeführt ist und zumindest beidseitige Wallgänge (10) besitzt.

**Claims**

1. Device allowing to take-off supernatant substances on an aqueous medium, more particularly oil, having an abutting surface (2), which is inclined towards the surface of the water and the front end of which lies below and the back end above the surface of the water, and having at least one collecting mouth (5, 16, 17, 22) in the abutting surface above the surface of the water, which mouth is connected to a collecting space (7), characterized in that the abutting surface (2) forms part of the surface of a float (1) and extends upwards at an angle immediately from the bottom (3) of the float (1), and the distance measured along the abutting surface (2) between the surface of the water (4) and the collection mouth (5, 16, 17, 22) and/or the angle of inclination ($\alpha$) of the abutting surface (2) with respect to the horizontals can be adjusted as a function of the abutting speed of the water and/or the height of the waves.

2. Device according to claim 1, characterized in that the collection mouth (5) extends over the entire width of the abutting surface (2) at the end thereof.

3. Device according to claim 1 or 2, characterized in that a plurality of slot-shaped collection mouths (17) are arranged at intervals adjacent to and above one another in the abutting surface (2).

4. Device according to claim 3, characterized in that the collection mouths (17) are arranged staggered above one another, such that the upper collection mouths are arranged in each case above the spaces between the lower collection mouths.

5. Device according to claim 3 or 4, characterized in that a slot-shaped collection mouth (16) which extends over the entire width of the abutting surface (2) is formed as the foremost collection mouth.

6. Device according to one or more of the claims 2 to 5, characterized in that the collection mouths (5, 16, 17, 22) are formed so that the size of their openings can be adjusted.

7. Device according to claim 3 or 4, characterized in that collection mouths (22) are arranged in the abutting surface (2), which are connected in each case to collection pockets (20), which are connected via suction tubes (21) and a pump (8) to the collection tank (23) for the skimmed-off substance.

8. Device according to one or more of the claims 1 to 7, characterized in that the collection receptacle (7) or the collection tank (23) are connected via an opening (7a) to the outside water.

9. Device according to one or more of the claims 1 to 8, characterized in that the immersion depth and angle of the float (1) are adjustable.

10. Device according to claim 9, characterized in that the float (1) comprises a floodable double bottom (11) and/or floodable wing passages (10).

11. Device according to one or more of the claims 1 to 10, characterized in that the angle of inclination ($\alpha$) of the abutting surface (2) is constant.

12. Device according to one or more of the claims 1 to 10, characterized in that the abutting surface (2) has areas with differing inclinations.

13. Device according to one or more of the claims 1 to 12, characterized in that the float (1) is formed as an elongated body and has an abutting surface (2) formed on one broadside and a machine room (12) formed on the other broadside, and has wing passages (10) at least on both broadsides.

**Revendications**

1. Dispositif permettant de prélèver des substances surnageantes sur un milieu aqueux, notamment du mazout, comportant une surface de montée (2) inclinée en direction de la surface de l'eau, dont l'extrémité antérieure se trouve sous la surface de l'eau et l'extrémité postérieure au-dessus de la surface de l'eau, et au moins une ouverture de captage (5, 16, 17, 22) dans la surface inclinée au-dessus de la surface de l'eau, reliée à une chambre collectrice (7), caractérisé en ce que la surface inclinée (2) constitue une partie de la surface d'un flotteur (1) et s'étend en oblique vers le haut directement à partir du fond (3) du flotteur (1), et que la distance entre la surface de l'eau (4) et l'ouverture de captage (5, 16, 17, 22), mesurée le long de la surface inclinée (2) et/ou l'angle ($\alpha$) que fait la surface inclinée (2) avec l'horizontale peuvent varier en fonction de la vitesse de montée de l'eau et/ou de la hauteur de la houle.

2. Dispositif selon la revendication 1, caractérisé en ce que l'ouverture de captage (5) s'étend sur toute la largeur de la surface inclinée (2) à l'extrémité de celle-ci.

3. Dispositif selon la revendication 1 ou 2, caractérisé en ce que plusieurs ouvertures de captage (17) en forme de fentes sont disposées dans la surface inclinée (2) à une certaine distance l'une à côté et l'une au-dessus de l'autre.

4. Dispositif selon la revendication 3, caractérisé en ce que les ouvertures de captage (17) sont décalées l'une au-dessus de l'autre de telle sorte que les ouvertures de captage du haut sont disposées au-dessus des espaces intermédiaires entre les ouvertures de captage du bas.

5. Dispositif selon la revendication 3 ou 4, caractérisé en ce que l'ouverture de captage la plus en avant est réalisée sous forme d'ouverture de captage (16) en forme de fente s'étendant sur toute la largeur de la surface inclinée (2).

6. Dispositif selon l'une ou plusieurs des revendications 2 à 5, caractérisé en ce que les ouvertures de captage (5, 16, 17, 22) sont réalisées de façon que la dimension de leur ouverture soit réglable.

7. Dispositif selon la revendication 3 ou 4, caractérisé en ce que dans la surface inclinée (2) sont disposées des ouvertures de captage (22) qui sont reliées respectivement à des poches collectrices (20), qui sont reliées par des tuyaux d'aspiration (21) et une pompe (8) au réservoir collecteur (23) pour la substance enlevée.

8. Dispositif selon l'une ou plusieurs des revendications 1 à 7, caractérisé en ce que le récipient collecteur (7) ou les réservoirs collecteurs (23) sont reliés par une ouverture (7a) à l'eau extérieure.

9. Dispositif selon l'une ou plusieurs des revendications 1 à 8, caractérisé en ce qu'on peut faire varier la profondeur d'immersion et l'angle d'immersion du flotteur (1).

10. Dispositif selon la revendication 9, caractérisé en ce que le flotteur (1) comporte un double fond (11) qui peut être rempli d'eau et/ou des caissons (10) qui peuvent être remplis d'eau.

11. Dispositif selon l'une ou plusieurs des revendications 1 à 10, caractérisé en ce que l'angle d'incidence ($\alpha$) de la surface inclinée (2) est constant.

12. Dispositif selon l'une ou plusieurs des revendications 1 à 10, caractérisé en ce que la surface inclinée (2) comporte des zones ayant des pentes différentes.

13. Dispositif selon l'une ou plusieurs des revendications 1 à 12, caractérisé en ce que le flotteur (1) est réalisé sous forme de corps allongé comportant une surface inclinée (2) formée dans un côté de la largeur et une chambre de machines (12) dans l'autre côté de la largeur, et il comporte des caissons (10) au moins des deux côtés.

# FIG.1

# FIG.2

FIG.3

0 058 179

FIG.4

FIG.5